Europäisches Patentamt

European Patent Office

Office européen des brevets

(19)

(11) Veröffentlichungsnummer: **0 387 366**
**A1**

## EUROPÄISCHE PATENTANMELDUNG

(12)

(21) Anmeldenummer: 89104414.1

(22) Anmeldetag: 13.03.89

(51) Int. Cl.5: **G06K 19/06**

(43) Veröffentlichungstag der Anmeldung:
19.09.90 Patentblatt 90/38

(84) Benannte Vertragsstaaten:
DE FR GB

(71) Anmelder: **DEUTSCHE BUNDESPOST,**
**vertreten durch den Präsidenten des**
**Fernmeldetechnischen Zentralamtes**
**Am Kavalleriesand 3**
**D-6100 Darmstadt(DE)**

(72) Erfinder: **Hegenbarth, Michael, Dipl.-Ing.**
**Hasengasse 9**
**D-6140 Bensheim(DE)**

(54) **Wertkarte mit implantierten integrierten Schaltkreisen.**

(57) Auf einer Wertkarte (IC-Karte) sind wenigstens zwei integrierte Schaltkreise vorgesehen, die derart angeordnet sind, daß kartenbetätigte Endgeräte für verschiedene Anwendungen und/oder verschieden ausgebildete Abtastorgane in Endgeräten der gleichen Anwendung mit der gleichen Wertkarte aktiviert werden können. Die beiden integrierten Schaltkreise können auf der gleichen Seite der Wertkarte oder jeweils auf ihrer Vorder-und Rückseite vorgesehen sein, wobei die Anordnung in diagonal gegenüberliegenden Ecken der Wertkarte, nebeneinander oder übereinander zweckmäßig ist. Die Wertkarte ermöglicht z. B. den grenzüberscheitenden Einsatz in Kartentelefonen mit verschiedenen ausgebildeten Abtastorganen.

## Wertkarte mit implantierten integrierten Schaltkreisen

Die Erfindung betrifft eine Wertkarte mit implantierten integrierten Schaltkreisen, für die sich im allgemeinen Sprachgebrauch der Begriff "IC-Karte" eingebürgert hat.

Der hier gewählte Begriff Wertkarte soll sowohl die bekannten Kredit- bzw. Debitkarten für Geldausgabeautomaten, Kartentelefone und andere Endgeräte der Kommunikationstechnik als auch Identifikationskarten für die Zugangskontrolle von sicherheitsempfindlichen Bereichen umfassen.

Wertkarten mit implantierten Schaltkreisen sind in vielfältigen Ausführungsformen bekannt (z. B. DE-PS 26 21 269 und DE-PS 26 21 271). Der in die Wertkarte implantierte integrierte Schaltkreis wird z. B. über elektrische Kontakte aktiviert, die sich in dem kartenbetätigten Endgerät befinden.

Kartenbetätigte Endgeräte der Kommunikationstechnik als auch Dienstleistungsautomaten im Bankgewerbe haben in den letzten Jahren eine zunehmende Verbreitung erfahren. Dabei ist für jede wertkartengesteuerte Dienstleistung oder Kommunikation eine besondere Wertkarte erforderlich. Andererseits unterscheiden sich die Lagen der Abtastorgane z. B. bei den Kartentelefonen verschiedener Länder trotz gleichen Kartenformates voneinander.

Der Erfindung liegt somit die Aufgabe zugrunde, eine bekannte IC-Karte so auszubilden, daß sie für verschiedene Anwendungen bzw. in Endgeräten mit verschieden angeordneten Abtastorganen einsetzbar ist.

Die Erfindung löst diese Aufgabe dadurch, daß wenigstens zwei integrierte Schaltkreise auf der Wertkarte vorgesehen sind, die derart angeordnet sind, daß kartenbetätigte Endgeräte für verschiedene Anwendungen und/oder verschieden ausgebildete Abtastorgane in Endgeräten der gleichen Anwendung mit der gleichen Wertkarte aktiviert werden können.

Der Vorteil der Erfindung liegt einmal darin, daß der potentielle Benutzer nur eine Wertkarte für verschiedene Anwendungen mit sich zu führen braucht. Außerdem wird ein grenzüberschreitender Einsatz der Wertkarte für die gleiche Anwendung, z. B. das Kartentelefon möglich, wenn sich die Lage der Abtastorgane in den wertkartengesteuerten Endgeräten in den verschiedenen Ländern trotz gleichen Kartenformats unterscheidet.

Im folgenden werden sechs mögliche Ausführungsformen der Erfindung anhand einer schematischen Darstellung mit sechs Figuren auf einem Blatt näher erläutert.

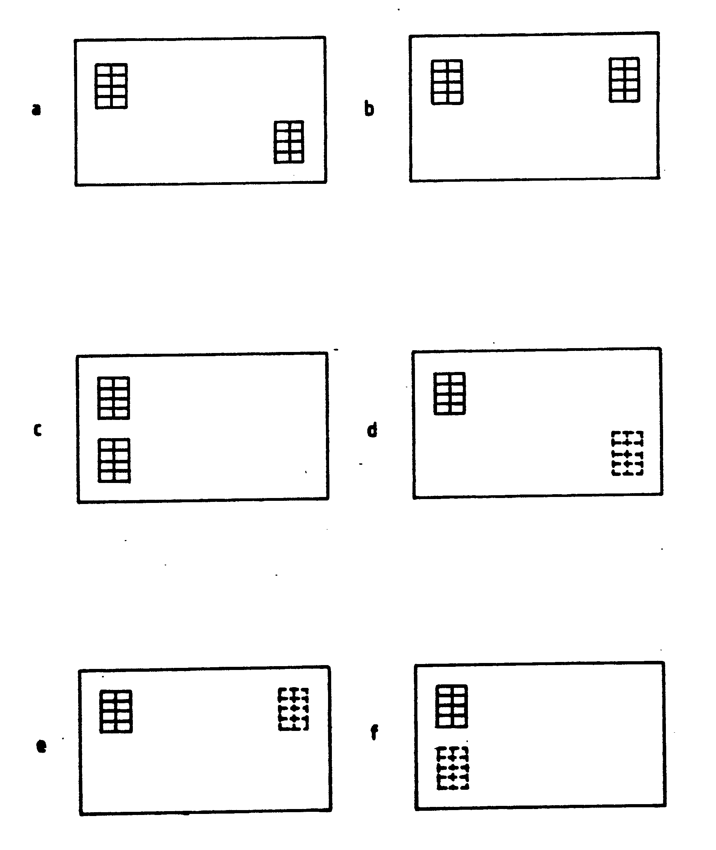

Die Figur a zeigt eine Ausführungsform, bei dem zwei integrierte Schaltkreise auf der gleichen Seite der Wertkarte an ihren diagonal gegenüberliegenden Ecken angeordnet sind.

Die Figur b zeigt eine Ausführungsform, bei der die beiden integrierten Schaltkreise auf gleicher Höhe der Wertkarte nebeneinander auf der gleichen Seite angeordnet sind.

Die Figur c zeigt eine Ausführungsform, bei der die beiden integrierten Schaltkreise auf gleicher Breite der Wertkarte übereinander auf der gleichen Seite angeordnet sind.

Die Figur d zeigt eine Ausführungsform, bei der ein integrierter Schaltkreis in der oberen Ecke der Vorderseite der Wertkarte, der andere integrierte Schaltkreis auf der diagonal gegenüberliegenden Ecke der Rückseite der Wertkarte angeordnet sind.

Die Figur e zeigt eine Ausführungsform, bei der ein integrierter Schaltkreis auf der Vorderseite, der andere integrierte Schaltkreis auf der Rückseite der Wertkarte in gleicher Höhe nebeneinander angeordnet sind.

Die Figur f zeigt eine Ausführungsform, bei der ein integrierter Schaltkreis auf der Vorderseite, der andere integrierte Schaltkreis auf der Rückseite der Wertkarte auf gleicher Breite übereinander angeordnet sind.

### Ansprüche

1. Wertkarte mit implantierten integrierten Schaltkreisen, **dadurch gekennzeichnet,** daß wenigstens zwei integrierte Schaltkreise auf der Wertkarte vorgesehen sind, die derart angeordnet sind, daß kartenbetätigte Endgeräte für verschiedene Anwendungen und/oder mit verschieden ausgebildeten Abtastorganen in Endgeräten der gleichen Anwendung mit der gleichen Wertkarte aktiviert werden können (Fig. a bis f).

2. Wertkarte nach Anspruch 1, dadurch gekennzeichnet, daß zwei integrierte Schaltkreise auf der gleichen Seite der Wertkarte angeordnet sind (Fig. a, b und c).

3. Wertkarte nach Anspruch 1, dadurch gekennzeichnet, daß je ein integrierter Schaltkreis auf der Vorder- und Rückseite der Wertkarte angeordnet ist (Fig. d, e und f).

4. Wertkarte nach Anspruch 2 oder 3, dadurch gekennzeichnet, daß die beiden integrierten Schaltkreise an diagonal gegenüberliegenden Ecken der Wertkarte angeordnet sind (Fig. a und d).

5. Wertkarte nach Anspruch 2 oder 3, dadurch gekennzeichnet, daß die beiden integrierten Schaltkreise auf gleicher Höhe der Wertkarte nebeneinander angeordnet sind (Fig. b und e).

6. Wertkarte nach Anspruch 2 oder 3, dadurch gekennzeichnet, daß die beiden integrierten Schaltkreise auf gleicher Breite der Wertkarte übereinander angeordnet sind (Fig. c und f).

a

b

c

d

e

f

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.3) |
|---|---|---|---|
| X | EP-A-0 262 036 (SCHLUMBERGER INDUSTRIES) * Figures 1-5; Zusammenfassung; Spalte 4, Zeile 32; Spalte 6, Zeile 55 – Spalte 7, Zeile 27; Spalte 8, Zeilen 16-31 * --- | 1-6 | G 06 K 19/06 |
| X | PATENT ABSTRACTS OF JAPAN, Band 7, Nr. 247 (E-208)[1392], 2. November 1983; & JP-A-58 134 456 (DAINIPPON INSATSU K.K.) 10-08-1983 * Zusammenfassung * --- | 1,2,6 | |
| A | PATENT ABSTRACTS OF JAPAN, Band 10, Nr. 254 (P-492)[2310], 30. August 1986; & JP-A-61 80 482 (HITACHI LTD) 24-04-1986 * Zusammenfassung * ----- | 1-6 | |
| | | | **RECHERCHIERTE SACHGEBIETE (Int. Cl.3)** |
| | | | G 06 K |

Der vorliegende Recherchenbericht wurde für alle Patentansprüche erstellt

| Recherchenort | Abschlußdatum der Recherche | Prüfer |
|---|---|---|
| DEN HAAG | 22-05-1989 | GYSEN L.A.D. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

................................................................

& : Mitglied der gleichen Patentfamilie, übereinstimmendes Dokument